# EUROPÄISCHE PATENTANMELDUNG

(11) **EP 2 883 917 A1**
(43) Veröffentlichungstag der Anmeldung: **17.06.2015**
(21) Anmeldenummer: 13005813.4
(22) Anmeldetag: 13.12.2013
(51) Int. Cl.: C09C 3/06, C09C 1/00, C09C 1/36, C09C 1/02

(54) **Calciumphosphat-haltige Kompositpigmente und Verfahren zu ihrer Herstellung**

(71) Anmelder: KRONOS INTERNATIONAL, INC., 51373 Leverkusen (DE)
(72) Erfinder: Mersch, Frank, 42799 Leichlingen (DE); Wilkenhöner, Uwe, 42107 Wuppertal (DE)

(57) **Zusammenfassung**

Die Erfindung betrifft Calciumphosphat-haltige Kompositpigmentpartikel, ihre Herstellung und ihre Verwendung in Beschichtungen, Kunststoffen und Laminat.
Die Kompositpigmentpartikel enthalten anorganische Pigmentpartikel - z.B. Titandioxidund gefälltes Calciumphosphat. In einer Ausführung enthalten die Kompositpigmentpartikel zusätzlich einen anorganischen und/oder organischen Füllstoff als Extender, bevorzugt gewählt aus der Gruppe Ca-, Ca-Mg- und Mg-Carbonate, natürliches und synthetisches Siliciumdioxid und Oxide. Die Kompositpigmentpartikel werden in einem kombinierten Prozess aus Dispergierung und Fällung hergestellt.
Die Verwendung der erfindungsgemäßen Kompositpigmentpartikel auf Basis Titandioxid ermöglicht je nach gewählter Kombination Pigmenteinsparungen ohne oder mit nur geringen Verlusten der optischen Eigenschaften. Alternativ können bei gleichem Pigmentgehalt auch bessere Werte z.B. im Aufhellvermögen erzielt werden. Insbesondere kann mit den erfindungsgemäßen Kompositpigmentpartikeln ein Teil oder der gesamte TiO₂-Anteil im Anwendersystem ersetzt werden.

## Beschreibung

### Gebiet der Erfindung

Die Erfindung betrifft Calciumphosphat-haltige Kompositpigmente mit hoher Witterungs- und chemischer Beständigkeit, ihre Herstellung und ihre Verwendung in Beschichtungen, Kunststoffen und insbesondere in Papier und Laminat.

### Technologischer Hintergrund der Erfindung

Anorganische Pigmente und insbesondere Titandioxidpigmente werden oft in verschiedene Matrices als Weißmacher, Tönungsmittel oder Trübungsmittel eingearbeitet. Titandioxid streut aufgrund seiner hohen Brechkraft Licht besonders effizient und ist deswegen das wichtigste Weißpigment in den Anwendungsbereichen Farben und Lacke, Kunststoffe, Papier und Fasern. Die Lichtstreueffizienz sinkt, wenn die Titandioxidpartikel in einem geringeren Abstand als etwa der halben Wellenlänge des Licht, also etwa 0,20 bis 0,25 µm voneinander entfernt in der Matrix verteilt sind Die Lichtstreueffizienz wird typischerweise mit Hilfe des Deckvermögens bzw. des Aufhellvermögens (tinting strength) des Titandioxidpigments in der Matrix gemessen.

Titandioxid ist auf der anderen Seite ein signifikanter Kostenfaktor, und es wird seit längerem nach Möglichkeiten gesucht, um die Einsatzmenge an Titandioxid zu verringern, ohne signifikante Einbußen im Deckvermögen hinnehmen zu müssen.
Eine Einsparung ist möglich durch die Kombination von Titandioxidpartikeln mit geeigneten Füllstoffen, die als sogenannte "Extender-Partikel" als Abstandshalter für die TiO₂-Partikel wirken sollen. Die bekannten Verfahren umfassen sowohl die einfache Mischung der Komponenten als auch die Verbindung der TiO₂-Partikel mit den Extender-Partikeln mittels eines ausgefällten Bindemittels oder die in situ-Ausfällung des Extenders auf der Oberfläche der Titandioxidpartikel. Desweiteren sind Verfahren bekannt, um die feinen Titandioxidpartikel auf gröberen Füllstoffpartikeln zu verteilen.

Aus dem umfangreich vorliegenden Stand der Technik werden im Folgenden nur ausgewählte Schriften zitiert.

WO 1999/035193 A1 beschreibt beispielsweise die Herstellung einer Pigmentmischung aus Titandioxid und einem anorganischen Extender ("Spacer") wie SiO₂ oder CaCO₃ zur Verwendung bei der Papierherstellung.

DE 10 057 294 C5 offenbart ein Pigmentgemisch aus Titandioxid und Talkum zum Einsatz in Dekarrohpapier.

EP 0 861 299 B1 offenbart ein Titandioxidpigment, welches mit anorganischen Nanopartikeln, beispielsweise kolloidaler Kieselsäure, sowie einer Schicht aus anorganischen Oxiden wie Aluminium-, Silicium- oder Zirkonoxid beschichtet ist, wobei die anorganische Oxidschicht entweder zwischen Titandioxidoberfläche und Nanopartikeln angeordnet ist oder die äußere Deckbeschichtung bildet. Bei den anorganischen Nanopartikeln handelt es sich um SiO₂, Al₂O₃ oder CaCO₃.

DE 10 2006 012 564 A1 offenbart Titandioxidpigmentpartikel, auf deren Oberfläche sich Mikrohohlkugeln sowie eine Aluminiumoxid-Aluminiumphosphat-Beschichtung befinden.

In dem Verfahren gemäß EP 0 956 316 B1 werden Pigmentteilchen und gefälltes Calciumcarbonat (PCC) in wässriger Phase miteinander vermischt, so dass ein Kompositpigment entsteht, bei dem die Carbonatteilchen mit einer Teilchengröße von 30 bis 100 nm an die Oberfläche der Pigmentteilchen angeheftet sind. Das Kompositpigment enthält 30 bis 90 Gew.-% gefälltes Calciumcarbonat.

DE 1 792 118 A1 offenbart die in situ-Ausfällung von Calciumcarbonat in einer Titandioxidpigmentsuspension durch Vermischen einer Calciumchlorid- und einer Natriumcarbonatlösung, wobei eine dieser Lösungen Titandioxidpigment enthält. Es entstehen Calciumcarbonat-Titandioxid-Kompositpartikel.

WO 2000/001771 A1 offenbart ein Kompositpigment, das anorganische Partikel einer Partikelgröße von etwa 1 bis 90 µm enthält und an deren Oberfläche in Folge entgegengesetzter Oberflächenladung Titandioxidpigmentpartikel geheftet sind. Die Herstellung erfolgt in einer wässrigen Phase. Die anorganischen Partikel sind ausgewählt aus gängigen Füllstoffen wie z.B. Kaolin. Ton, Talkum, Glimmer oder Carbonate.

Die Patentanmeldung DE 10 2012 012 899.1 (angemeldet 28.06.2012) offenbart ein Kompositpigment, das Titandioxid und ein partikuläres Material als Extender enthält sowie Calciumcarbonat, das im Herstellungsprozess gefällt wird. Die Kompositpartikel werden in einem kombinierten Prozess aus Dispergierung und Fällung hergestellt. Das Kompositpigment ist geeignet zur Verwendung in Beschichtungen, Kunststoff und Laminat.

### Aufgabenstellung und Kurzbeschreibung der Erfindung

Der Erfindung liegt die Aufgabe zugrunde, ein alternatives Kompositpigment zu schaffen, weiches eine hohe Witterungsbeständlgkeit und chemische Beständigkeit aufweist und insbesondere im Vergleich zu reinem Titandioxid ein gleiches Deckvermögen erreicht. Desweiteren besteht die Aufgabe in der Angabe eines Verfahrens zur Herstellung.

Die Aufgabe wird gelöst durch ein Calciumphosphat-haltiges Kompositpigment, das anorganische Pigmentpartikel, und gefälltes partikuläres Calciumphosphat in einer Menge von mindestens 10 Gew.-%, bevorzugt mindestens 30 Gew.-% und insbesondere mindestens 50 Gew.-% bezogen auf Kompositpigment enthält.
Die Aufgabe wird desweiteren gelöst durch ein Verfahren zur Herstellung von Calciumphosphat-haltigen Kompositpigmentpartikeln umfassend die Schritte:
a) Bereitstellen einer wässrigen Suspension enthaltend anorganische Pigmentpartikel sowie Bereitstellen einer Calcium-Quelle und einer Phosphor-Quelle,
b) Zusammenführung der Komponenten Suspension der anorganischen Pigmentpartikel, Calcium-Quelle und Phosphor-Quelle in beliebiger Reihenfolge,
c) Fällung von partikulärem Calciumphosphat, so dass Kompositpigmentpartikel gebildet werden, die Calciumphosphat in einer Menge von mindestens 10 Gew.-%, bevorzugt mindestens 30 Gew.-% und insbesondere mindestens 50 Gew.-% bezogen auf Kompositpigment enthalten,
d) Abtrennen der Kompositpigmentpartikel aus der Suspension.

Weitere vorteilhafte Ausformungen der Erfindung sind in den Unteransprüchen angegeben.

### Figuren

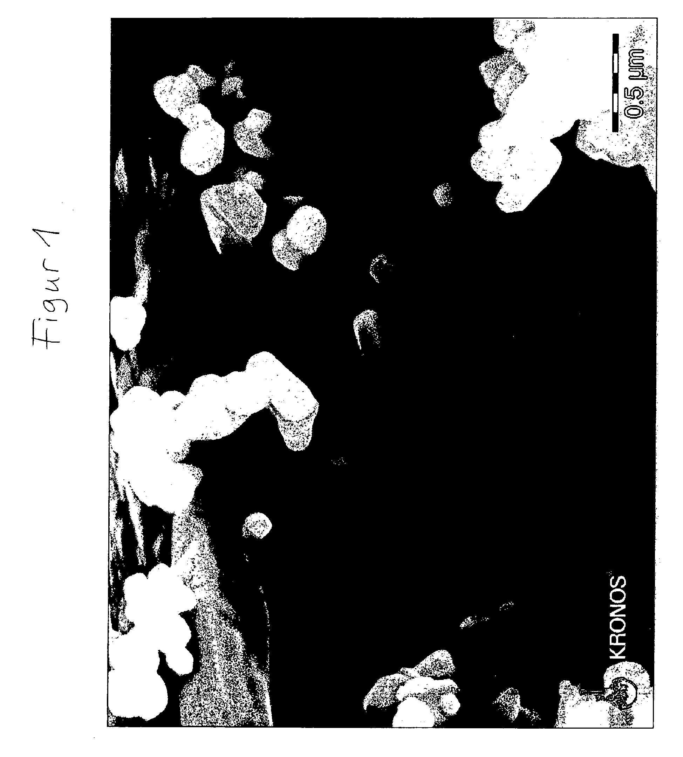

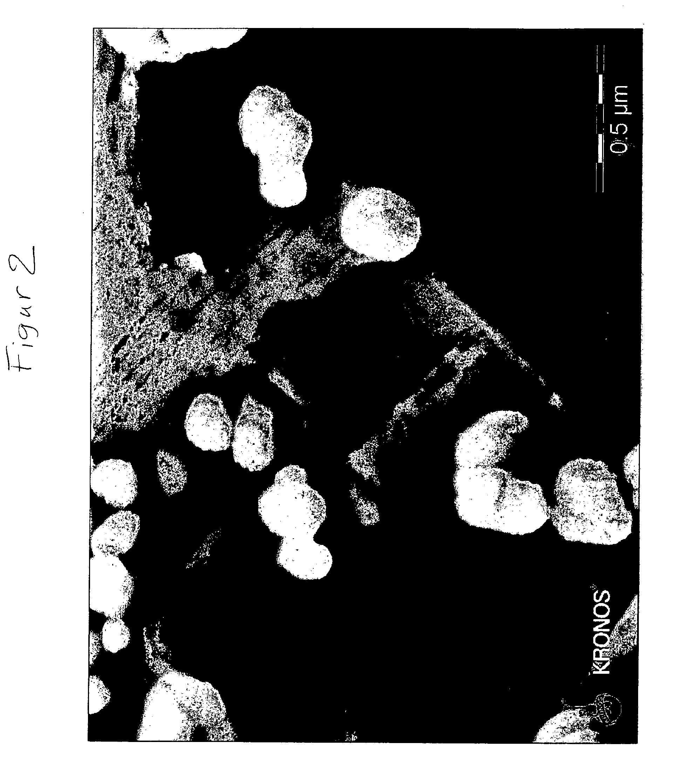

Figuren 1 und 2: Rasterelektronenmikroskopaufnahmen von Kompositpigmentpartikeln gemäß Beispiel.

### Beschreibung der Erfindung

Alle im Folgenden offenbarten Angaben bezüglich Größe in µm usw., Konzentration in Gew.-% oder Vol.%, pH-Wert usw. sind so zu verstehen, dass alle Werte, die im Bereich der dem Fachmann bekannten jeweiligen Messgenauigkeit liegen, mit umfasst sind.

Die erfindungsgemäßen Kompositpigmentpartikel enthalten anorganische Pigmentpartikel, und in situ gefälltes Calciumphosphat, Die gefällten Calciumphosphatpartikel bilden diskrete Partikel bzw. Partikelagglomerate und wirken als Träger für die Pigmentpartikel oder als Abstandshalter (Extender). Die erfindungsgemäßen Kompositpartikel zeichnen sich weiterhin dadurch aus, dass zwischen Träger- bzw. Extenderpartikel und Pigmentpartikel ein starker Verbund existiert, der in der weiteren üblichen Verarbeitung beim Anwender wie z.B. bei der Dispergierung in einem Dissolver oder in einem Inline-Dispergierer nur schwer getrennt werden kann. Damit unterscheidet sich das erfindungsgemäße Kompositpigment von bekannten Pigment-Extender-Mischungen.

Unter anorganischen Pigmentpartikeln werden im Rahmen der Erfindung Partikel im Größenbereich von etwa 100 nm bis etwa 1 µm verstanden. Als Pigment kommen grundsätzlich anorganische Pigmente wie Titandioxid, Eisenoxid, Zinkoxid, Zinksulfid, Chrompigmente und Sulfide in Betracht.
Insbesondere ist Titandioxid geeignet Grundsätzlich können oberflächenbehandelte oder unbehandelte Titandioxidpigmentpartikel verwendet werden. Bevorzugt werden unbehandelte Titandioxidgrundkörper-Partikel verwendet, insbesondere Titandioxidgrundkörper-Partikel aus dem Chloridprozess. Die Titandioxidpigmentpartikel können dotiert sein, vorzugsweise mit Aluminium. Wirtschaftlich besonders vorteilhaft ist es, nach dem Chloridprozess hergestellte, nicht-sandgemahlene und nicht-entchlorte Titandioxidgrundkörper-Partikel einzusetzen. Alternativ ist es auch möglich, sandgemahlene und entchlorte Titandioxidgrundkörper-Partikel aus dem Chlöridprozess oder sandgemahlene Titandioxidgrundkörper-Partikel aus dem Sulfatprozess einzusetzen.

Die Calciumphosphatpartikel sind überwiegend kristallin. In einer besonderen Ausführung weisen sie eine Partikelgröße von mindestens 0,1 µm, bevorzugt mindestens 0,5 µm und insbesondere mindestens 1,0 µm auf. Die Partikel sind sowohl Primärpartikel wie Partikelagglomerate.
Die erfindungsgemäßen Kompositpartikel enthalten bevorzugt mindestens 10 Gew.-%, insbesondere mindestens 30 Gew.-% und insbesondere bevorzugt 50 Gew.-% Calciumphosphat. Der Pigmentgehalt der Kompositpartikel beträgt vorzugsweise 10 bis 90 Gew.-%.

In einer besonderen Ausführung der Erfindung enthält das Kompositpigment zusätzlich mindestens einen weiteren anorganischen und/oder mindestens einen organischen Füllstoff. Der anorganische Füllstoff kann ausgewählt sein aus der Gruppe natürliche und synthetische Silikate (z.B. Talkum, Kaolin, Glimmer, Mullit, Quarz, Kieselgele, gefällte Kieselsäure, pyrogene Kieselsäure, Silicumdioxid, oberflächenbehandeltes Siliciumdioxid), Carbonate (z.B. natürliches oder gefälltes Calcium- oder Magnesiumcarbonat, Dolomit), Sulfate (z.B. natürliches oder gefälltes Calcium- und Bariumsulfat), Oxide/Hydroxide (z.B. Aluminiumoxid, Aluminiumhydroxid, Magnesiumoxid), natürliche Gesteine wie Basalt-und Bimsmehl, Perlite sowie weitere dem Fachmann bekannten Füllstoffe (z,B. Wollastonit, Feldspate, Glimmer, faserartige Füllstoffe, Glasmehl, etc.).
Der weltere Füllstoff weist bevorzugt eine Partikelgröße von etwa D,1 bis 30 µm, insbesondere von etwa 1 bis 10 µm auf. Der weitere Füllstoff kann in einer Menge von 10 bis 90 Gew.-%, bevorzugt 20 bis 80 Gew.-% und insbesondere 30 bis 70 Gew.-% enthalten sein.

Die erfindungsgemäßen Kompositpigmentpartikel enthalten das Pigment in ideal dispergierter Form und führen damit im Anwendersystem zu einer Steigerung der Effizienz der Lichtstreuung des anorganischen Pigments, insbesondere von Titandioxidpigment Auf diese Weise kann der Teil des Pigments, der üblicherweise im Anwendersystem nicht ideal dispergiert, sondern "geflockt" vorliegt, eingespart werden, Die Kompositpigmentpartikel führen im Anwendersystem bei gleicher Pigmentmenge zu verbessertem Deckvermögen, bzw. erlauben im Anwendersystem eine Reduktion des Pigmentgehalts bei gleichbleibendem Deckvermögen.

Die erfindungsgemäßen Kompositpigmentpartikel können durch Zusammenführung der Komponenten wässrige Suspension von anorganischen Pigmentpartikeln, Calcium-Quelle und Phosphor-Quelle hergestellt werden.

Zunächst wird eine wässrige Suspension von anorganischen Pigmentpartikeln bereitgestellt. Unter anorganischen Pigmentpartikeln werden im Rahmen der Erfindung Partikel im Größenbereich von etwa 100 nm bis etwa 1 µm verstanden. Als Pigment kommen grundsätzlich anorganische Pigmente wie Titandioxid, Eisenoxid, Zinkoxid, Zinksulfid, Chrompigmente und Sulfide in Betracht. Insbesondere ist Titandioxid geeignet. Die Titandioxidpigmentpartikel können oberfiächenbehandelt oder unbehandelt sein, beispielsweise kann es sich um Titandioxidgrundkörper aus dem Sulfatprozess oder dem Chloridprozess handeln. Insbesondere sind nach dem Chloridprozess hergestellte, gemahlene oder ungemahlene und ggfs. nicht-entchlorte Titandioxidgrundkörper-Partikel geeignet. Ebenso geeignet sind sändgemahlene Titandioxidgrundkörper-Partikel aus dem Sulfatprozess.

Desweiteren wird eine Calcium-Quelle bereitgestellt. Bei der Calcium-Quelle kann es sich um Calciumcarbonat, Calciumphosphat (z.B. Apatit) oder um ein lösliches Calciumsalz handeln wie beispielsweise Calciumchlorid, Calciumnitrat oder gebrannter oder gelöschter Kalk. Bei Calciumcarbonat als Calciumquelle kann es sich um eine dem Fachmann bekannte kommerziell übliche Calciumcarbonatvariante handeln. Vorteilhafterweise verfügt das eingesetzte Calciumcarbonat über einen hohen Weißgrad. Die Partikelgröße beträgt bis zu mehreren mm. Bevorzugt wird natürliches Calciumcarbonat in Form von Kalkstein, Kreide oder Marmormehl verwendet.

Desweiteren wird eine Phosphor-Quelle bereitgestellt. Als Phosphor-Quelle geeignet sind beispielsweise Phosphorsäure, Phosphate, Hydrogenphosphat, Dihydrogenphosphat und Polyphosphate.

Die Zusammenführung der Komponenten Suspension der anorganischen Pigmentpartikel, Calcium-Quelle und Phosphor-Quelle kann in beliebiger Reihenfolge erfolgen.

In einer Ausführung der Erfindung wird von der wässrigen Suspension der anorganischen Pigmentpartikel ausgegangen. In die Suspension wird die Calcium-Quelle und die Phosphor-Quelle gegeben, wobei die Reihenfolge der Zugabe von Calcium-Quelle und Phosphor-Quelle beliebig ist.
Vorzugsweise weist die Suspension nach Zugabe der Calcium-Quelle und der Phosphor-Quelle einen pH-Wert von <3, insbesondere von <2 auf. Der pH-Wert kann ggfs. durch zusätzliche Zugabe einer pH-steuernden Substanz wie Säure, Lauge oder entsprechendes Salz eingestellt werden.

In einer alternativen Ausführung der Erfindung wird zunächst eine wässrige Mischung aus Calcium-Quelle und Phosphor-Quelle hergestellt und anschließend die anorganischen Pigmentpartikel hinzugegeben. Im übrigen wird verfahren wie oben beschrieben.

In einer weiteren Ausführung der Erfindung kann auch von einer wässrigen Lösung oder Suspension der Calcium-Quelle ausgegangen werden, in die die Pigmentpartikel und Schließlich die Phosphor-Quelle gegeben werden. Entsprechend kann auch von einer wässrigen Lösung der Phosphor-Quelle ausgegangen werden in die die Pigmentpartikel und schließlich die Calcium-Quelle gegeben werden.

Anschließend wird die Fällung von Calciumphosphat eingeleitet, und es bilden sich Calciumphosphat-haltige Kompositpigmentpartikel. Die Fällung von Calciumphosphat wird entweder durch Erhöhung des pH-Werts auf >2 und /oder durch Erhöhung der Temperatur auf >50°C bevorzugt >60°C veranlasst. Die Erhöhung des pH-Werts kann durch Zugabe einer pH-steuernden Substanz wie z.B. NaOH oder Ca(OH)₂ erreicht werden. Das gefällte calciumphosphat ist überwiegend kristallin und partikelförmig. Die Partikel sind sowohl Primärpartikel wie Partikelagglomerate.
Dem Fachmann ist bekannt, dass die Partikelgröße des gefällten Calciumphosphats durch Variation der Fällungsbedingungen wie Temperatur, pH-Wert-Verlauf, Zugabegeschwindigkeit und über die Zugabe fällungsaktiver Substanzen wie z.B. Kristallkeime, Magnesiumionen oder organische Substanzen gesteuert werden kann. In einer besonderen Ausführung weisen die Partikel eine Partikelgröße von mindestens 0,1 µm, bevorzugt mindestens 0,5 µm und insbesondere mindestens 1,0 µm auf.

Die Mengen Phosphat und Calcium werden so abgestimmt, dass die gebildeten Kompositpigmentpartikel vorzugsweise mindestens 10 Gew.-%, insbesondere mindestens 30 Gew.-% und insbesondere bevorzugt mindestens 50 Gew.-% Calciumphosphat enthalten. Der TiO₂-Gehalt der Kompositpigmentpartikel beträgt vorzugsweise 10 bis 90 Gew.-%.

In einer besonderen Ausführung der Erfindung wird der Suspension mindestens ein weiterer anorganischer und/oder mindestens ein organischer Füllstoff zugegeben. Der anorganische Füllstoff kann ausgewählt sein aus der Gruppe natürliche und synthetische Silikate (z.B. Talkum, Kaolin, Glimmer, Mullit, Quarz, Kieselgele, gefällte Kieselsäure, pyrogene Kieselsäure, Siliumdioxid, oberflächenbehandeltes Siliciumdioxid), Carbonate (z.B. natürliches oder gefälltes Calcium- oder Magnesiumcarbonat, Dolomit), Sulfate (z.B. natürliches oder gefälltes Calcium- und Bariumsulfat), Oxide/Hydroxide (z.B. Aluminiumoxid, Aluminiumhydroxid, Magnesiumoxid), natürliche Gesteine wie Basalt und Bimsmehl, Perlite sowie weitere dem Fachmann bekannten Füllstoffe (z.B. Wollastonit, Feldspate, Glimmer, faserartige Füllstoffe, Glasmehl, etc.).
Der weitere Füllstoff weist bevorzugt eine Partikelgröße von etwa 0,1 bis 30 µm, insbesondere von etwa 1 bis 10 µm auf. Der weitere Füllstoff kann in einer Menge von 10 bis 90 Gew.-%, Bevorzugt 20 bis 80 Gew.-% und insbesondere 30 bis 70 Gew.-% bezogen auf Kompositpigmentpartikel zugegeben werden.

Abschließend werden die Kompositpigmentpartikel aus der Suspension abgetrennt, gewaschen und getrocknet.

Je nach gewünschter Qualität des mit den Kompositpigmentpartikeln hergestellten Produkts (Beschichtung, Kunststoff, Laminat, etc.) kann die Effektivität des Pigments, insbesondere des Titandioxids optimiert werden. Durch Einsparung von Pigment, erreicht durch die effektivere Nutzung im Kompositpigmentpartikel, ergibt sich ein wirtschaftlicher Vorteil im Vergleich zum getrennten Einsatz von Extender und Pigment. Die Verwendung der erfindungsgemäß hergestellten Kompositpigmentpartikel im Anwendersystem ermöglicht eine Pigmenteinsparung von bis zu 30%, bevorzugt 15 bis 30% bei sonst gleichen optischen Eigenschaften.
Insbesondere kann das Kompositpigment als teilweiser oder 100 %iger Ersatz für das reine Pigment (z.B. Titandioxid) eingesetzt werden.

Ein weiterer Vorteil der erfindungsgemäßen Kompositpigmentpartikel liegt in der durch das Calciumphosphat hervorgerufenen Witterungs- und chemischen Beständigkeit. Damit eignen sich die Kompositpigmentpartikel insbesondere für die Verwendung in Laminat und Papier.

Ein weiterer Vorteil liegt darin, dass das TiO₂ auf dem Kompositpigmentpartikel bereits gut verteilt vorliegt und somit Energie für die Dispergierung beispielsweise in einem Lacksystem eingespart werden kann. Die im Vergleich zum reinen Pigment gröberen Kompositpigmentpartikel benötigen weniger Dispergier- und Mahlenergie und geringere Mengen an Dispergiermitteln, Hierdurch ergibt sich für den Lackhersteller ein weiterer Vorteil.

In einer weiteren Ausführung des erfindungsgemäßen Verfahrens können die erfindungsgemäßen Kompositpigmentpartikel mit anorganischen Verbindungen wie beispielsweise SiO₂ oder Al₂O₃ behandelt werden, wie sie bei der Titandioxidpigmentherstellung üblicherweise eingesetzt werden. Dem Fachmann sind die entsprechenden Verbindungen und Verfahrensweisen bekannt.

In einer besonderen Ausführung des erfindungsgemäßen Verfahrens können zusätzlich organische Additive zugegeben werden, vorzugsweise in einer Menge von 0,05 bis 30 Gew.-% bevorzugt 0,5 bis 10 Gew.-% bezogen auf Pigment-Extendermischung. Die organischen Additive können sowohl in fester als auch in flüssiger Form zugegeben werden. Geeignet als organische Additive sind zum einen handelsübliche wachsartige Additive mit oder ohne weitere chemische Funktionalisierung. Zum anderen sind bekannte Dispergieradditive oder andere in der Lacktechnologie übliche Hilfsstoffe beispielsweise für Rheologie, Entschäumung, Benetzung etc. geeignet.

Die erfindungsgemäßen Kompositpigmentpartikel sind insbesondere geeignet für die Verwendung in Papier und Laminaten. Sie können weiterhin eingesetzt werden in Beschichtungen und Kunststoffen.

### Beispiel

Die Erfindung wird anhand des folgenden Beispiels genauer beschrieben, ohne dass dadurch der Umfang der Erfindung eingeschränkt werden soll.

In 250 ml 20%ige Phosphorsäure mit einer Temperature von 25°C wurden unter Rühren 50 g Calciumcarbonat (Marmormehl) gegeben. Nachfolgend wurden weitere 100 ml 20%iger Phosphorsäure zugegeben, so dass sich ein pH-Wert von 1,3 einstellte. Die Reaktion lief unter starker Gasentwicklung ab. Es bildete sich ein geringer Bodensatz von Calciumphosphat.
Anschließend wurden 80 ml einer wässrigen Suspension von unbehandelten Titandioxidpartikeln mit einer Konzentration von 600 g/L TiO₂ unter Rühren zugegeben. Es stellte sich ein pH-Wert von 1,8 ein. Anschließend wurden unter Rühren 63,7 g Calciumhydroxid zugegeben, wobei sich ein pH-Wert von 3,5 einstellte und Calciumphosphat ausfiel. Die Kompositpigmentpartikel wurden anschließend mittels Filtration abgetrennt, gewaschen und getrocknet.
Die Kompositpigmentpartikel wurden unter dem Rasterelektronenmikroskop untersucht (Figuren 1, 2). Sie sind i. w. aus großen Calciumphosphat-Kristallen (> 5 µm) aufgebaut, auf deren Oberfläche Titandioxidpartikel fixiert sind (Fig. 1, 2) bzw. die die Titandioxidpartikel umwachsen (Fig. 2).

## Patentansprüche

1. Calciumphosphat-haltiges Kompositpigment enthaltend anorganische Pigmentpartikel und gefälltes partikuläres Calciumphosphat in einer Menge von mindestens 10 Gew.-%, bevorzugt mindestens 30 Gew.-% und insbesondere mindestens 50 Gew.-% bezogen auf Kompositpigment.

2. Kompositpigment nach Anspruch 1 **dadurch gekennzeichnet, dass** die Pigmentpartikel in einer Menge von 10 bis 90 Gew.-% enthalten sind.

3. Kompositpigment nach Anspruch 1 oder 2 **dadurch gekennzeichnet, dass** die Pigmentpartikel Titandioxidpartikel sind.

4. Kompositpigment nach einem oder mehreren der Ansprüche 1 bis 3 **dadurch**
**gekennzeichnet, dass**
das gefällte Calciumphosphat eine Partikelgröße von mindestens 0,1 µm, bevorzugt 0,5 µm und insbesondere von mindestens 1 µm aufweist.

5. Kompositpartikel nach einem oder mehreren der Ansprüche 1 bis 4 **dadurch**
**gekennzeichnet, dass**
zusätzlich mindestens ein anorganischer oder organischer Füllstoff enthaltend ist.

6. Kompositpartikel nach Anspruch 5 **dadurch gekennzeichnet, dass** der anorganische Füllstoff ausgewählt ist aus der Gruppe Calcium-, Calcium-Magnesium- und Magnesium-Carbonate, Sulfate, natürliche Phosphate, Oxide, Hydroxide, Siliciumoxid, Silikate, Alumosilikate Perlite und Glasmehl.

7. Verfahren zur Herstellung von Calciumphosphat-haltigen Kompositpigmentpartikeln umfassend die Schritte:
a) Bereitstellen einer wässrigen Suspension enthaltend anorganische Pigmentpartikel sowie Bereitstellen einer Calcium-Quelle und einer Phosphor-Quelle,
b) Zusammenführung der Komponenten Suspension der anorganischen Pigmentpartikel, Calcium-Quelle und Phosphor-Quelle in beliebiger Reihenfolge
c) Fällung von partikulärem Calciumphosphat, so dass Kompositpigmentpartikel gebildet werden, die Calciumphosphat in einer Menge von mindestens 10 Gew.%, bevorzugt mindestens 30 Gew.-% und insbesondere mindestens 50 Gew.-% bezogen auf Kompositpigment enthalten,
d) Abtrennen der Kompositpigmentpartikel aus der Suspension.

8. Verfahren nach Anspruch 7 **dadurch gekennzeichnet, dass** die anorganischen Pigmentpartikel Titandioxidpartikel sind.

9. Verfahren nach Anspruch 7 oder 8 **dadurch gekennzeichnet, dass** als Calcium-Quelle eine Verbindung ausgewählt aus der Gruppe Calciumcarbonat, Calciumphosphat, lösliches Calciumsalz, gebrannter und gelöschter Kalk eingesetzt wird.

10. Verfahren nach Anspruch 9 **dadurch gekennzeichnet, dass** als Calciumcarbonat Kalkstein, Marmormehl oder Kreide eingesetzt wird.

11. Verfahren nach Anspruch 9 **dadurch gekennzeichnet, dass** als lösliches Calciumsalz Calciumchlorid oder Calciumnitrat eingesetzt wird.

12. Verfahren nach einem oder mehreren der Ansprüche 7 bis 11 **dadurch**
**gekennzeichnet, dass**
als Phosphor-Quelle eine Verbindung ausgewählt aus der Gruppe Phosphorsäure, Phosphat, Hydrogenphosphat. Dihydrogenphosphat und Polyphosphat eingesetzt wird.

13. Verfahren nach einem oder mehreren der Ansprüche 7 bis 12 **dadurch**
**gekennzeichnet, dass**
die Calciumphosphat-Fällung durch Anhebung des pH-Werts und/oder durch Temperaturerhöhung auf >50°C veranlasst wird.

14. Verfahren nach einem oder mehreren der Ansprüche 7 bis 13 **dadurch**
**gekennzeichnet dass**
in die Suspension der anorganischen Pigmentpartikel zusätzlich mindestens ein anorganischer oder ein organischer Füllstoff gegeben wird.

15. Verwendung des Kompositpigments nach einem oder mehreren der Ansprüche 1 bis 14 in Beschichtungen, Kunststoffen, Papier und Laminat.
